(19) Europäisches Patentamt
European Patent Office
Office européen des brevets

(11) **EP 3 898 366 B1**

(12) **FASCICULE DE BREVET EUROPEEN**

(45) Date de publication et mention
de la délivrance du brevet:
**17.09.2025 Bulletin 2025/38**

(21) Numéro de dépôt: **19829043.9**

(22) Date de dépôt: **12.12.2019**

(51) Classification Internationale des Brevets (IPC):
**B60W 30/12** *(2020.01)* **B60W 30/18** *(2012.01)*
**B62D 15/02** *(2006.01)* **B60W 50/00** *(2006.01)*

(52) Classification Coopérative des Brevets (CPC):
**B60W 30/12; B60W 30/18145; B62D 15/025;**
B60W 2050/0008; B60W 2050/0012;
B60W 2050/0013; B60W 2050/0033;
B60W 2520/10; B60W 2520/20; B60W 2540/18;
B60W 2552/30

(86) Numéro de dépôt international:
**PCT/EP2019/084938**

(87) Numéro de publication internationale:
**WO 2020/126840 (25.06.2020 Gazette 2020/26)**

(54) **DISPOSITIF ET PROCÉDÉ DE CONTRÔLE DE TRAJECTOIRE D'UN VÉHICULE AUTOMOBILE**

VORRICHTUNG UND VERFAHREN ZUR STEUERUNG DER BAHN EINES KRAFTFAHRZEUGS

DEVICE AND METHOD FOR CONTROLLING THE TRAJECTORY OF A MOTOR VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.12.2018 FR 1873825**

(43) Date de publication de la demande:
**27.10.2021 Bulletin 2021/43**

(73) Titulaire: **Ampere SAS**
**92100 Boulogne-Billancourt (FR)**

(72) Inventeurs:
- **KVIESKA, Pedro**
  **78000 Versailles (FR)**
- **MUSTAKI, Simon**
  **75004 Paris (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
DE-A1- 10 254 392      US-A1- 2006 020 382
US-A1- 2007 213 901

**Description**

La présente invention concerne le contrôle de trajectoire d'un véhicule automobile, et plus particulièrement un dispositif et un procédé de contrôle de trajectoire.

Les véhicules automobiles sont fréquemment équipés de dispositifs de contrôle de trajectoire assistant le conducteur pour maintenir le véhicule dans une voie de circulation. Ils agissent sur la direction du véhicule en modifiant l'angle de braquage des roues directrices du véhicule. Une loi de commande est mise en œuvre et peut être une loi de commande de confort de type maintien au centre d'une voie de circulation, également connue sous la dénomination anglo-saxonne « Lane Centering Assist » ou sous l'acronyme correspondant « LCA ». La loi de commande peut aussi être une loi de commande sécuritaire de type d'aide au maintien dans la voie, également connue sous la dénomination anglo-saxonne « Lane Keeping Assist » ou sous l'acronyme correspondant « LKA ».

Dans ce contexte, il est généralement choisi de mettre en œuvre une loi de commande douce et évitant les à-coups. On évite ainsi de surprendre le conducteur et on améliore le confort des occupants du véhicule.

Un dispositif de contrôle de trajectoire comprenant un module de rétroaction permet de mettre en œuvre une telle loi de commande. Le module de rétroaction réalise une boucle fermée et présente une dynamique lente. Pour améliorer le niveau de prestation, on peut également ajouter un module anticipateur. Le module anticipateur ajoute un terme en boucle ouverte au terme de boucle fermée fourni par le module à rétroaction.

On pourra par exemple se rapporter au document FR 3 051 756 qui illustre un dispositif de contrôle en temps réel de trajectoire d'un véhicule. Ce dispositif comprend un module à rétroaction générant un terme de boucle fermée et un module anticipateur générant un terme de boucle ouverte. La boucle fermée garde le véhicule au centre d'une voie virtuelle qui est considérée toujours droite. La boucle ouverte prend en compte la courbure et compense l'effet du virage sur les états et la commande.

Bien qu'un tel dispositif apporte globalement satisfaction, ne remettant notamment jamais en cause la sécurité des passagers, certaines situations d'utilisation du véhicule peuvent occasionner des situations désagréables pour le conducteur, telles que l'apparition de survirage ou un écartement anormal du véhicule. Par exemple, en cas de surcharge du véhicule automobile, il est parfois constaté un écartement anormal du véhicule par rapport au centre de la voie.

Pour pallier cet inconvénient, on peut rendre la boucle fermée plus dynamique pour que le survirage ou l'écartement soit corrigé par la boucle fermée. De ce fait, on assure la bonne sécurité des occupants du véhicule. Cependant, la boucle fermée plus dynamique est moins confortable pour le conducteur et les occupants du véhicule.

Le document US2007/213901A1 décrit un procédé de réglage d'un module anticipateur présentant notamment les inconvénients précités.

Au vu de ce qui précède, l'invention a pour but de remédier aux inconvénients précités.

Plus particulièrement, l'invention vise à améliorer le confort dans un véhicule lors de la mise en œuvre d'un contrôle de la trajectoire en vue du maintien dans une voie de circulation, notamment lors de l'apparition d'un virage.

A cet effet, il est proposé un procédé de réglage d'un module anticipateur équipant un dispositif de contrôle de la trajectoire d'un véhicule automobile, ledit module utilisant un modèle bicyclette dudit véhicule, dans lequel :

- on détecte si le module anticipateur est inadapté lors d'un virage en tenant compte d'un écart latéral par rapport à une trajectoire idéale et/ou d'une contribution d'un module à rétroaction du dispositif de contrôle,
- on détermine des paramètres primaires,
- on calcule un paramètre secondaire par une méthode de calcul par optimisation tenant compte des paramètres primaires déterminés, et
- on met à jour un modèle bicyclette du véhicule en tenant compte du paramètre secondaire calculé.

Un tel procédé permet de corriger le réglage du module anticipateur. Il en résulte une correction de l'écart de trajectoire davantage assurée par le module anticipateur et donc la possibilité de réduire la contribution du module à rétroaction, fournissant un meilleur confort dans le véhicule automobile. En particulier, l'écartement anormal par rapport au centre de la voie évoqué précédemment provient notamment de l'impact de la charge sur la dynamique du véhicule. Le procédé suivant l'invention permet de tenir compte de cet impact.

On détecte que le module anticipateur est inadapté si :

- l'écart latéral par rapport à une trajectoire idéale est supérieur à un seuil d'écart prédéfini, et
- un rapport d'une contribution du module à rétroaction sur une contribution du module anticipateur pour la commande de braquage est supérieur à un seuil de rapport prédéfini.

Cette détection permet une meilleure identification de conditions nécessitant la correction du réglage du module anticipateur.

De préférence, lorsque l'on met à jour un modèle bicyclette du véhicule, on détermine une donnée caractéristique de modèle bicyclette corrigé en tenant compte du paramètre secondaire, on calcule une moyenne entre une donnée caractéristique de modèle bicyclette actuel et la donnée caractéristique de modèle bicyclette corrigé et on remplace la donnée caractéristique de modèle bicyclette actuel par la moyenne calculée.

Une telle étape de mise à jour permet d'augmenter la robustesse du procédé de réglage.

Différentes variantes sont envisageables concernant le paramètre secondaire.

Selon une première variante, le calcul d'un paramètre secondaire comprend le calcul d'un gradient de sous-virage corrigé, le gradient de sous-virage corrigé étant de préférence une donnée caractéristique de modèle bicyclette du véhicule.

Une telle variante est préférable dans la mesure où elle nécessite moins de ressources en mémoire et en calcul.

De préférence, les paramètres primaires comprennent une courbure de voie de circulation, une vitesse du véhicule et un angle au volant, le gradient de sous-virage corrigé étant calculé par minimisation d'un écart d'angle au volant, et avantageusement par minimisation de la fonction :

[Math 1]
$$f = \sum_i \left( \rho(i) \times (L_{tot} + \nabla_{sv} \times v(i)^2) \times d - SWA_{mesuré}(i) \right)^2$$

où, $L_{tot}$ est l'empattement du véhicule, $d$ est le rapport de démultiplication de la colonne de direction du véhicule, $\nabla_{sv}$ est le gradient de sous-virage et quel que soit une itération i, $\rho(i)$ est la courbure de voie de circulation lors de l'itération i, $v(i)$ est la vitesse du véhicule lors de l'itération i et $SWA_{mesuré}(i)$ est l'angle au volant au cours de l'itération i.

Selon une seconde variante, le calcul du paramètre secondaire comprend le calcul d'une rigidité de train avant corrigée et/ou d'une rigidité de train arrière corrigée.

Le procédé peut, de manière optionnelle, comprendre l'identification d'autres paramètres du modèle bicyclette comme la masse, l'inertie, la position du centre de masse.

De préférence, les paramètres primaires comprennent un écart latéral par rapport à une trajectoire idéale, une vitesse longitudinale du véhicule, un angle de cap du véhicule, un angle au volant et une courbure de voie de circulation et dans lequel on construit une trajectoire de référence à partir des paramètres primaires, l'optimisation étant mise en œuvre par minimisation de l'écart entre la trajectoire de référence et une trajectoire du véhicule déterminée à partir de données caractéristiques de modèle bicyclette actuel du véhicule.

Avantageusement, l'on construit la trajectoire de référence sur la base des paramètres primaires en appliquant la relation :

[Math 2]
$$\begin{cases} X_{ref}(t_k) = X_{route}(t_k) - y_L(t_k) \cdot \sin\left(\psi_{rel} + \psi_{route}(t_k)\right) \cdot (t_k - t_{k-1}) \\ Y_{ref}(t_k) = Y_{route}(t_k) + y_L(t_k) \cdot \cos\left(\psi_{rel} + \psi_{route}(t_k)\right) \cdot (t_k - t_{k-1}) \end{cases}$$

où $t_k$ est l'instant relatif à une itération k, $(X_{ref}(t_k), Y_{ref}(t_k))$ est le couple de coordonnées de la trajectoire de référence à l'instant $tk$, $(X_{route}(t_k), Y_{route}(t_k))$ est le couple de coordonnées de la trajectoire de centre de voie de circulation à l'instant $t_k$, $y_L(t_k)$ est le décalage latéral entre le centre de gravité du véhicule et le centre de voie de circulation, $\psi_{rel}$ est l'angle de lacet relatif du véhicule, $\psi_{route}(t_k)$ est l'angle de tangente à la trajectoire de centre de voie de circulation à l'instant $t_k$, le couple de coordonnées de la trajectoire de centre de voie de circulation et l'angle de tangente à la trajectoire de centre de voie de circulation étant déterminés en appliquant la relation d'initialisation :

[Math 3]
$$\psi_{route}(0) = X_{route}(0) = Y_{route}(0) = 0$$

et la relation de récurrence :

[Math 4]
$$\begin{cases} X_{route}(t_k) = v \cdot \cos\left(\psi_{route}(t_k)\right) \cdot (t_k - t_{k-1}) + X_{route}(t_{k-1}) \\ Y_{route}(t_k) = v \cdot \sin\left(\psi_{route}(t_k)\right) \cdot (t_k - t_{k-1}) + Y_{route}(t_{k-1}) \\ \psi_{route}(t_k) = \rho \cdot v \cdot (t_k - t_{k-1}) + \psi_{route}(t_{k-1}) \end{cases}$$

Dans un autre mode de mise en œuvre, l'on réinitialise le modèle bicyclette du véhicule à chaque période d'absence d'utilisation du véhicule.

3

Une telle réinitialisation est tout particulièrement avantageuse dans la mesure où l'on évite d'avoir un module anticipateur inadapté si les conditions d'utilisation du véhicule ont été modifiées lors de la période d'absence d'utilisation du véhicule.

Selon un autre aspect, il est proposé un programme d'ordinateur comprenant un code configuré pour, lorsqu'il est exécuté par un processeur ou une unité de contrôle électronique, mettre en œuvre le procédé tel que défini précédemment.

Selon encore un autre aspect, il est proposé un dispositif de réglage d'un module anticipateur équipant un dispositif de contrôle de la trajectoire d'un véhicule automobile, ledit module utilisant un modèle bicyclette dudit véhicule, comprenant un module de détection configuré pour détecter si le module anticipateur est inadapté lors d'un virage en tenant compte d'un écart latéral par rapport à une trajectoire idéale et/ou d'une contribution d'un module à rétroaction du dispositif de contrôle, un module de détermination de paramètres primaires, un module de calcul apte à calculer un paramètre secondaire par une méthode de calcul par optimisation tenant compte des paramètres primaires déterminés par le module de détermination et un module de mise à jour configuré pour mettre à jour un modèle bicyclette du véhicule en tenant compte du paramètre secondaire calculé par le module de calcul.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] est une représentation schématique d'un dispositif de contrôle de trajectoire d'un véhicule automobile,
[Fig 2] est une représentation schématique d'un dispositif de réglage du dispositif représenté sur la figure 1,
[Fig 3] est un diagramme d'un procédé selon un premier mode de mise en œuvre de l'invention,
[Fig 4]

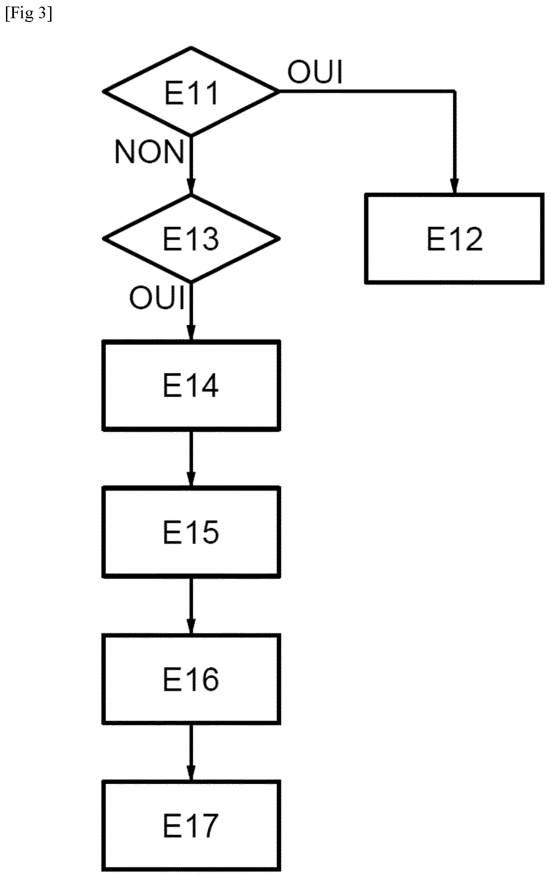

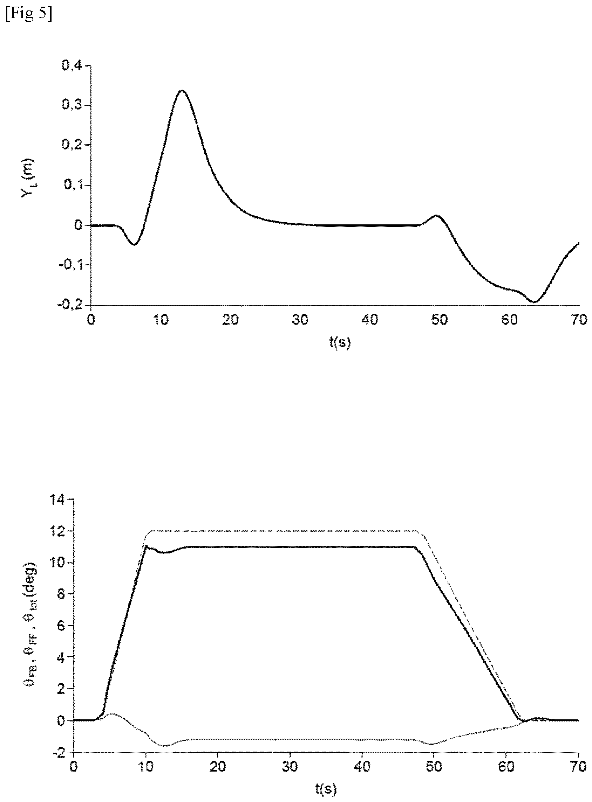

[Fig 5] sont des graphes représentant l'écart latéral et la contribution d'un module anticipateur et d'un module à rétroaction au cours du procédé représenté sur la figure 3,

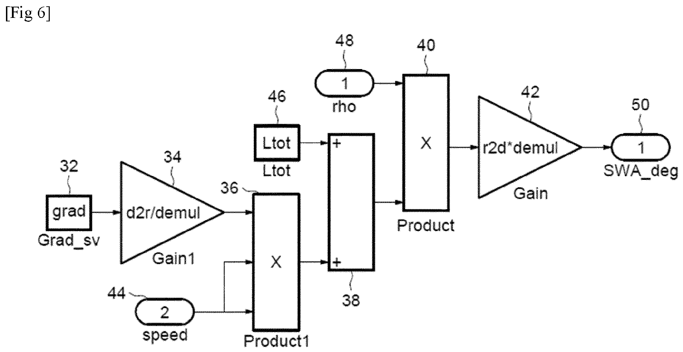

[Fig 6] est une représentation du calcul du paramètre secondaire au cours du procédé représenté sur la figure 3,

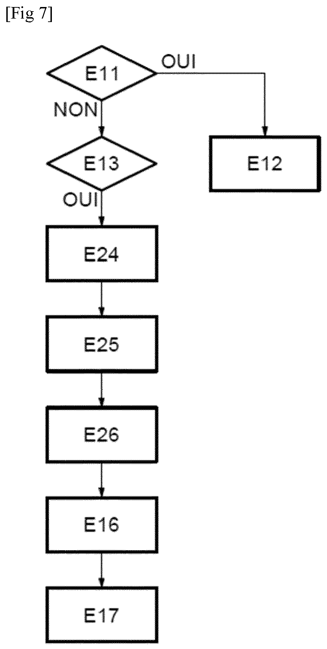

[Fig 7] est un diagramme d'un procédé selon un second mode de mise en œuvre de l'invention,

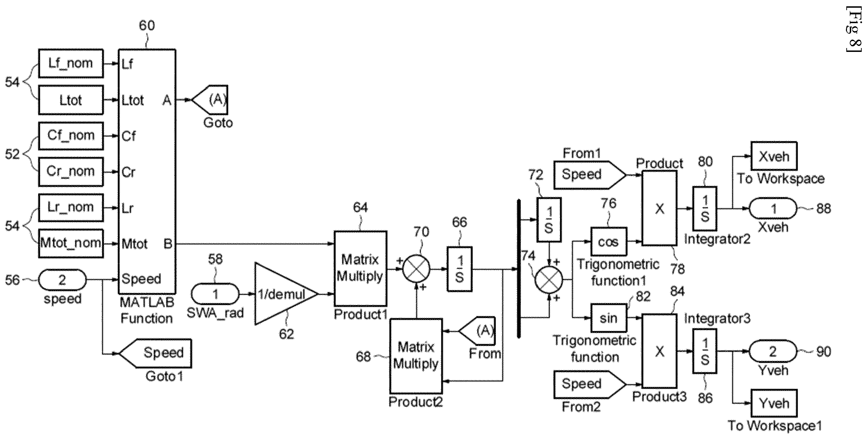

[Fig 8] est une représentation du calcul des paramètres secondaires au cours du procédé de la figure 7.

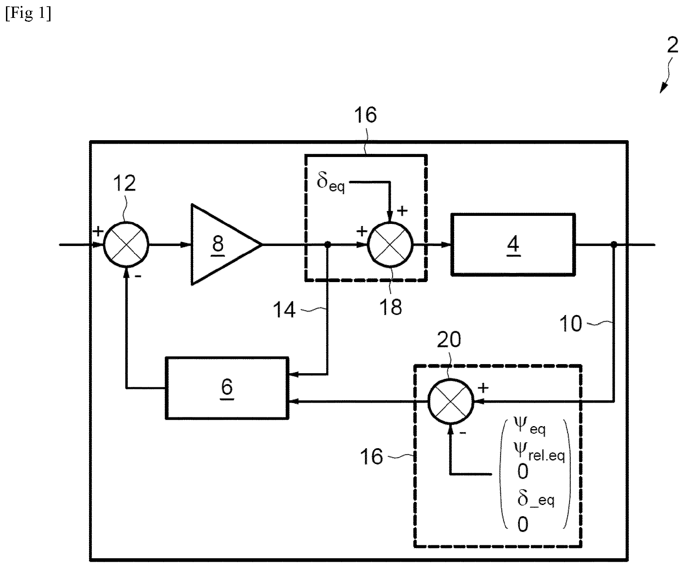

On a représenté sous la forme de schéma-bloc sur la figure 1 un dispositif de contrôle de trajectoire 2 destiné à être incorporé dans un véhicule automobile (non représenté). Le dispositif 2 est un système d'aide à la conduite avancé, également connu sous la dénomination anglo-saxonne « advanced driver assistance system » ou sous l'acronyme correspondant « ADAS ». Plus particulièrement, le dispositif 2 a pour fonction d'élaborer une commande d'un système de direction du véhicule automobile de sorte à maintenir le véhicule au centre d'une voie virtuelle.

A cet effet, le schéma-bloc de la figure 1 comporte un premier bloc 4 correspondant au véhicule dans lequel le dispositif 2 est incorporé. Le bloc 4 est soumis à une entrée étant une requête d'angle au volant. Le bloc 4 délivre une sortie étant les mesures disponibles, en l'espèce la vitesse de lacet, l'angle de lacet relatif par rapport à la route, l'écart latéral et l'angle au volant. Le schéma-bloc comporte un second bloc 6 correspondant à un observateur, un capteur ou un estimateur. Le schéma-bloc comprend un troisième bloc 8 correspondant à un correcteur, par exemple constitué par un vecteur de gains.

Le dispositif 2 comporte une première boucle de retour 10 raccordée en aval du bloc 4, comprenant l'observateur 6 et fournie à un soustracteur 12. Le dispositif 2 comporte une deuxième boucle de retour 14 s'étendant depuis un point de raccordement entre les blocs 8 et 4 jusqu'au bloc 6. L'ensemble constitué par les boucles 10 et 14, le bloc 6 et le soustracteur 12 est désigné dans la présente demande par l'expression « module à rétroaction » également connue sous la dénomination anglo-saxonne « feedback module ».

L'observateur du bloc 6 met en œuvre une représentation d'état basé sur le modèle bicyclette. Dans la présente demande, l'expression « modèle bicyclette » désigne le modèle bicyclette du véhicule utilisé par le dispositif 2. Le modèle bicyclette est notamment utilisé par des moyens logiciels dans le cadre du calcul d'un terme d'anticipation. Le modèle bicyclette s'appuie sur un vecteur d'état x dont les composantes sont les sept états suivants :

- $\dot{\psi}$ : vitesse de l'angle de cap relatif du véhicule par rapport à la chaussée,
- $\psi_{rel}$ : angle de cap relatif du véhicule par rapport à la chaussée,
- $\dot{y_L}'$ : vitesse latérale du véhicule par rapport à la chaussée,
- $y_L$ : écart latéral du véhicule par rapport à la chaussée,
- $\dot{\delta}$ : vitesse de l'angle de roue avant,
- $\delta$ : angle de braquage, en l'espèce angle de roue avant,
- $\int y_L'$ : intégrale de l'écart latéral.

Le dispositif 2 comporte en outre un module anticipateur 16. Le module anticipateur 16 est schématiquement représenté sur le schéma-bloc de la figure 1 par deux rectangles pointillés. Le module 16 est également connu sous la dénomination anglo-saxonne « feedforward module ».

Le module anticipateur 16 comporte un sommateur 18 situé entre le point de raccordement de la boucle 14 et le bloc 4. Le sommateur 18 additionne un terme de boucle ouverte $\delta_{eq}$.

Le module anticipateur 16 comporte un soustracteur 20 placé entre le point de raccordement de la boucle 10 et le bloc 6. Le soustracteur 20 retranche un vecteur de boucle ouverte à la boucle 10.

La représentation d'état est représentée par l'équation ci-dessous :

[Math 5]

$$
\frac{\mathrm{d}}{\mathrm{dt}} \underbrace{\begin{pmatrix} \dot{\psi} \\ \psi_{rel} \\ \dot{y}_L \\ y_L \\ \dot{\delta} \\ \delta \\ \int -y_L \end{pmatrix}}_{X} = \underbrace{\begin{pmatrix} \frac{-(C_f l_f^2 + C_r l_r^2)}{I_z v} & \frac{C_f l_f - C_r l_r}{I_z} & \frac{-(C_f l_f - C_r l_r)}{I_z v} & 0 & 0 & \frac{C_f l_f}{I_z} & 0 \\ 1 & 0 & 0 & 0 & 0 & 0 & 0 \\ \frac{-(C_f l_f - C_r l_r)}{mv} & \frac{C_f + C_r}{m} & \frac{-(C_f + C_r)}{mv} & 0 & 0 & \frac{C_f}{m} & 0 \\ 0 & 0 & 1 & 0 & 0 & 0 & 0 \\ 0 & 0 & 0 & 0 & -2\xi\omega & -\omega^2 & 0 \\ 0 & 0 & 0 & 0 & 1 & 0 & 0 \\ 0 & 0 & 0 & -1 & 0 & 0 & 0 \end{pmatrix}}_{A} \underbrace{\begin{pmatrix} \dot{\psi} \\ \psi_{rel} \\ \dot{y}_L \\ y_L \\ \dot{\delta} \\ \delta \\ \int -y_L \end{pmatrix}}_{X}
$$

$$
+ \underbrace{\begin{pmatrix} 0 \\ 0 \\ 0 \\ 0 \\ \omega^2 \\ 0 \\ 0 \end{pmatrix}}_{B_\delta} \delta_{roues} + \underbrace{\begin{pmatrix} 0 \\ -v \\ -v^2 \\ 0 \\ 0 \\ 0 \\ 0 \end{pmatrix}}_{B_\rho} \rho
$$

[Math 6]

$$\underbrace{\begin{pmatrix} \dot{\psi} \\ \psi_{rel} \\ y_L \\ \delta \\ \int -y_L \end{pmatrix}}_{Y} = \underbrace{\begin{pmatrix} 1 & 0 & 0 & 0 & 0 & 0 & 0 \\ 0 & 1 & 0 & 0 & 0 & 0 & 0 \\ 0 & 0 & 0 & 1 & 0 & 0 & 0 \\ 0 & 0 & 0 & 0 & 0 & 1 & 0 \\ 0 & 0 & 0 & 0 & 0 & 0 & 1 \end{pmatrix}}_{C} \begin{pmatrix} \ddot{\psi} \\ \psi_{rel} \\ \dot{y}_L \\ y_L \\ \dot{\delta} \\ \delta \\ \int -y_L \end{pmatrix}$$

où $C_f$ est la raideur équivalente de l'essieu avant, $C_r$ est la raideur équivalente de l'essieu arrière, $L_f$ est la distance entre l'essieu avant et le centre de gravité, $L_r$ est la distance entre le centre de gravité et l'essieu arrière, m est la masse du véhicule, $I_z$ est le moment d'inertie du véhicule et v est la vitesse longitudinale du véhicule.

Ce modèle bicyclette est une simplification de la réalité. Toutefois, les données caractéristiques du modèle bicyclette utilisé par le dispositif 2 sont directement liées à la configuration du véhicule, et en particulier à des paramètres de configuration tels que la distribution de la masse sur le véhicule, la pression des pneumatiques, etc.

La commande latérale en boucle fermée vise à minimiser le vecteur d'état x autour de zéro, correspondant à une ligne droite. Lorsqu'apparaît un virage, trois états doivent être corrigés : l'angle de cap relatif $\psi_{rel}$, la dérivée d'angle de cap relatif $\dot{\psi}'$ et l'angle de braquage aux roues avant $\delta$. L'angle $\delta$ est relié à l'angle au volant par une dynamique du second ordre dont le gain correspond au rapport de démultiplication de la colonne de direction.

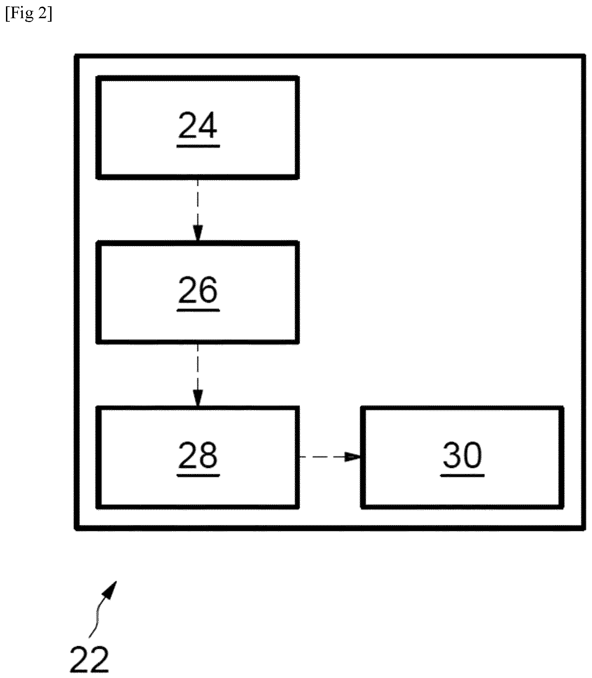

Afin d'améliorer la performance du module 16, le dispositif 2 comporte un dispositif de réglage 22 représenté sur la figure 2.

En référence à la figure 2, le dispositif 22 comprend un module de détection 24. Le module 24 est en liaison d'information avec le bloc 6 du dispositif 2 de manière à quantifier l'écart latéral du véhicule par rapport à une trajectoire idéale. Dans l'exemple illustré, la trajectoire idéale est une ligne centrale d'une voie de circulation dans laquelle le véhicule circule. Le module 24 est par ailleurs en liaison d'information avec le module à rétroaction et le module anticipateur 16 du dispositif 2. Ce faisant, le module 24 est capable de comparer une contribution du module à rétroaction pour la commande de direction du véhicule à une contribution du module anticipateur 16 pour la commande de direction du véhicule. Ce faisant, le module 24 est doté des moyens matériels et logiciels pour détecter si le module 16 est inadapté lors d'un virage.

Le dispositif 22 comporte un module de détermination 26. Le module 26 est en liaison d'information avec le module 24. Plus particulièrement, le module 26 est configuré pour être activé si le module 24 a détecté que le module anticipateur 16 était inadapté lors d'un virage. Le module 26 est en liaison d'information avec le bloc 6 et/ou avec des capteurs et/ou avec des estimateurs équipant le véhicule automobile de manière à détecter une pluralité de paramètres primaires.

Le dispositif 22 comporte un module de calcul 28. Le module 28 est en liaison d'information avec le module 26. Plus particulièrement, le module 28 est configuré pour calculer un/des paramètre(s) secondaire(s) lorsque le module 26 a déterminé des paramètres primaires. En l'espèce, le module 28 met en œuvre une méthode de calcul par optimisation sur la base des paramètres primaires déterminés par le module 26.

Le dispositif 22 comporte en outre un module de mise à jour 30. Le module 30 est en liaison d'information avec le module 28 de sorte à pouvoir mettre à jour le modèle bicyclette du véhicule utilisé par le dispositif 2 en tenant compte du/des paramètre(s) secondaire(s) calculé(s) par le module 28.

En référence à la figure 3, on a schématiquement représenté un procédé selon un premier mode de mise en œuvre de l'invention. Le procédé est mis en œuvre au moyen du dispositif 22 représenté sur la figure 2. Dans ce mode de mise en œuvre, le calcul du terme de boucle ouverte est déterminé par application de l'équation :

[Math 7]

$$\delta_{eq} = \rho(L_{tot} + \nabla_{sv} \cdot v^2)$$

où $\rho$ est une courbure de la voie de circulation, $L_{tot}$ est l'empattement du véhicule, v est la vitesse du véhicule, en l'espèce la

vitesse longitudinale, et $\nabla_{sv}$ est un gradient de sous-virage déterminé par :

[Math 8]

$$\nabla_{sv} = \frac{-m(C_f L_f - C_r L_r)}{C_f C_r L_{tot}}$$

Le procédé est mis en œuvre de manière régulière, par exemple toutes les 10 ms. Le procédé comprend une première étape de test E11. Au cours de l'étape E11, on détermine si le véhicule vient de commencer une période d'absence d'utilisation. Par exemple, on peut déterminer au cours de l'étape E11 une mise à l'arrêt d'un moteur équipant le véhicule automobile. Si, lors de l'étape E11, il est détecté que le véhicule entre dans une période d'absence d'utilisation, on applique une étape E12. Sinon, il est mis en œuvre une étape de test E13. Au cours de l'étape E12, on réinitialise les paramètres du modèle bicyclette aux valeurs d'initialisation.

L'étape E13 est mise en œuvre au cours d'un virage. Lors de cette étape, on détecte si le module 16 est inadapté aux conditions d'utilisation du véhicule dans lequel le dispositif 2 est incorporé. L'étape E13 est mise en œuvre par le module 24. Plus précisément, au cours de l'étape E13, on surveille l'écart latéral par rapport à une trajectoire idéale et on surveille les contributions respectives du module à rétroaction et du module 16 pour la commande de braquage.

Plus précisément, dans l'exemple illustré, il est détecté que le module 16 est inadapté si la valeur absolue de l'écart latéral maximal dépasse un seuil d'écart $s_e$ égal à 0,2 m et si la valeur absolue du rapport entre la contribution du module à rétroaction sur la contribution du module 16 au moment de l'écart latéral maximal est supérieure à un seuil de rapport $s_r$ égal à 0,1.

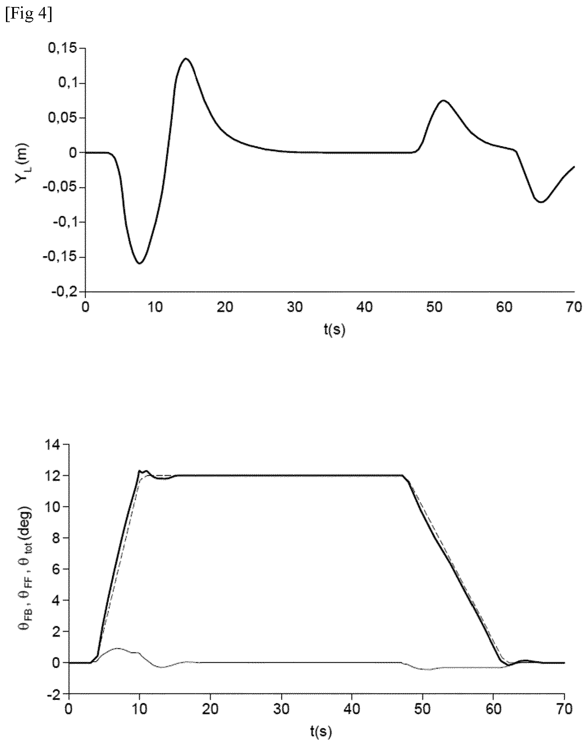

En référence à la figure 4, on a schématiquement représenté l'écart latéral ($y_L$) et sur un second graphique les contributions du module à rétroaction ($\theta_{FB}$) et du module 16 ($\theta_{FF}$) pour une simulation de virage à 90 km/h avec une courbure de 3x10$^{-3}$ m$^{-1}$ lorsque le module 16 est adapté aux conditions d'utilisation du véhicule.

La figure 5 illustre l'évolution dans un virage identique de l'écart $y_L$ et des contributions $\theta_{FB}$ et $\theta_{FF}$ avec un module 16 inadapté. Plus particulièrement, les rigidités de trains avant et arrière du véhicule ont été augmentées de 30 % sans pour autant modifier les données caractéristiques $C_f$ et $C_r$ du modèle bicyclette utilisé par le module 16. Un tel scénario est par exemple susceptible de se produire lorsque l'utilisateur du véhicule automobile change de pneumatiques. Sur les figures 4 et 5, $\theta_{tot}$ correspond à la contribution totale pour la commande de braquage, soit la somme des contributions $\theta_{FF}$ et $\theta_{FB}$.

Il ressort des graphes de la figure 4 que l'écart $y_L$ maximal est, en valeur absolue, de l'ordre de 0,16 m. Lorsque l'écart $y_L$ maximal se produit, la contribution $\theta_{FB}$ est inférieure à 1° alors que la contribution $\theta_{FF}$ est de 10°. Par contraste, il ressort de la figure 5 que l'écart $y_L$ maximal est de l'ordre de 0,33 m. A ce moment, la contribution $\theta_{FB}$ est de l'ordre de -1,8° et la contribution $\theta_{FF}$ est de 12°. De ces résultats et par comparaison avec les seuils $s_e$ et $s_r$ précités, il apparaît que le module 16 est inadapté dans le cas de la figure 5.

Le module 16 correspond à une inversion du modèle en régime stabilisé. Si le modèle bicyclette est bien identifié lors d'un virage, l'écart $y_L$ sera petit et la contribution $\theta_{FF}$ sera prépondérante par rapport à la contribution $\theta_{FB}$. Avantageusement, on ne déclenche l'étape E13 que lorsque l'accélération latérale est supérieure à un seuil d'accélération $s_a$. Ce faisant, on ne met en œuvre la détection d'un module anticipateur inadapté que lorsque les dynamiques latérales sont suffisamment excitées. Il en résulte une pertinence de la détection encore améliorée.

De nouveau en référence à la figure 3, si au cours de l'étape E13, il a été détecté que le module 16 était inadapté, on met en œuvre une étape E14. L'étape E14 est mise en œuvre au cours d'un virage suivant. L'étape E14 est mise en œuvre par le module 26. Au cours de l'étape E14, on détermine des paramètres primaires, en l'espèce la courbure $\rho$ de voie de circulation, la vitesse longitudinale v du véhicule, un angle au volant $SWA_{mesuré}$ et un temps $t$.

Ensuite, on met en œuvre une étape E15 de calcul d'un paramètre secondaire. L'étape E15 est mise en œuvre par le module 28. Plus particulièrement, le paramètre secondaire est calculé par une méthode de calcul par optimisation sur la base des paramètres primaires déterminés au cours de l'étape E14. Cette optimisation consiste à trouver le gradient de sous virage $\nabla_{sv}$ tel que le module 16 fournisse la quasi-totalité de la commande de braquage et que la contribution $\theta_{FB}$ soit presque nulle en virage.

La figure 6 illustre schématiquement le calcul du gradient $\nabla_{sv}$ optimal. Le schéma de la figure 6 est issu du logiciel Simulink.

Le schéma de la figure 6 comporte un bloc 32 de saisie de la variable à déterminer, en l'espèce $\nabla_{sv}$ (Grad_sv).

Le bloc 32 est relié à un bloc de gain pur 34. Le bloc 34 a pour fonction de multiplier la variable à déterminer pour convertir des degrés en radians et pour appliquer le rapport de démultiplication entre l'angle de braquage aux roues avant et l'angle au volant. Le résultat issu du bloc 34 est envoyé à un bloc multiplicateur 36.

Un bloc 44 de saisie de paramètre primaire permet de saisir la vitesse v (speed) du véhicule. Le bloc 44 est connecté au bloc 36 de sorte à multiplier le résultat issu du bloc 34 par le carré de la vitesse du véhicule.

Le résultat issu du bloc 36 est fourni à un bloc sommateur 38. Le bloc 38 est en liaison avec un bloc 46 de saisie de la constante Ltot correspondant à l'empattement du véhicule.

Le résultat de la somme calculée par le bloc 38 est fourni à un bloc multiplicateur 40. Le bloc 40 est en communication avec un bloc 48 de saisie d'un paramètre primaire permettant de saisir la courbure $\rho$ (rho) de la voie de circulation.

Le résultat de la multiplication calculée par le bloc 40 est fourni à un bloc de gain pur 42. Le bloc 42 multiplie ce résultat pour convertir des radians en degrés. Le résultat obtenu en degré est un angle au volant SWA_deg en degrés fourni au bloc de sortie 50.

Pour trouver le gradient $\nabla_{sv}$ approprié, on renseigne les entrées, à savoir la vitesse v dans le bloc 44 et la courbure $\rho$ dans le bloc 48. L'algorithme recherche un gradient $\nabla_{sv}$ tel que la sortie SWA_deg obtenue dans le bloc 50 corresponde au sens des moindres carrés à l'angle $SWA_{mesuré}$ au volant réel. De ce fait, on cherche, en fonction du gradient, à minimiser la fonction f définie comme :

[Math 9]

$$f = \sum_i \left( \rho(i) \times (L_{tot} + \nabla_{sv} \times v(i)^2) \times d - SWA_{mesuré}(i) \right)^2$$

Dans l'exemple illustré, l'optimisation est réalisée sur une série de mesures. Au cours d'un virage, plusieurs itérations sont mises en œuvre. Au cours d'une itération i, les paramètres primaires $\rho(i)$, $v(i)$ et $SWA_{mesuré}(i)$ sont déterminés. Après la dernière itération i=n, la fonction f est minimisée au sens des moindres carrés en tenant compte des itérations 1 à n. Dans cette équation, $L_{tot}$ est l'empattement du véhicule et d est le rapport de démultiplication de la colonne de direction du véhicule. Un exemple d'algorithme pouvant être mis en œuvre pour déterminer le gradient $\nabla_{sv}$ approprié est la fonction « Lsqnonlin » du logiciel Matlab. A l'issue de l'étape 15, on a déterminé un paramètre secondaire, en l'espèce une valeur de gradient de sous-virage $\nabla_{sv}$,

Suite à l'étape E15, une étape E16 de mise à jour du modèle bicyclette est mise en œuvre. Au cours de l'étape E16, on calcule une moyenne entre le gradient $\nabla_{sv\_actuel}$ actuel et le gradient corrigé $\nabla_{sv\_corrigé}$ calculé au cours de l'étape E15. Le résultat est une moyenne de gradient de sous-virage $\nabla_{sv\_moyen}$ :

[Math 10]

$$\nabla_{sv\_moyen} = \frac{\nabla_{sv\_actuel} + \nabla_{sv\_corrigé}}{2}$$

Bien que, dans l'exemple illustré, il soit calculé une moyenne entre les gradients actuel et corrigé, on peut bien entendu, sans sortir du cadre de l'invention, envisager un autre type de calcul, par exemple une moyenne arithmétique pondérée :

[Math 11]

$$\nabla_{sv\_moyen} = 0{,}2 \times \nabla_{sv\_actuel} + 0{,}8 \times \nabla_{sv\_corrigé}$$

Dans l'exemple illustré, le gradient $\nabla_{sv}$ est une donnée caractéristique du modèle bicyclette. Ainsi, au cours de l'étape E16, on a déterminé une donnée caractéristique de modèle bicyclette corrigé. Toutefois, on ne sort bien entendu pas du cadre de l'invention en envisageant un modèle bicyclette présentant d'autres données caractéristiques. Selon un exemple alternatif, le gradient $\nabla_{sv}$ déterminé au cours de l'étape E15 peut être utilisé pour déterminer un couple de rigidités de dérive ($C_f$, $C_r$) du véhicule en s'appuyant sur l'équation :

[Math 12]

$$\nabla_{sv} = \frac{-m(C_f L_f - C_r L_r)}{C_f C_r L_{tot}}$$

Le procédé comporte ensuite une étape E17 au cours de laquelle on remplace le gradient $\nabla_{sv\_actuel}$ par la moyenne $\nabla_{sv\_moyen}$. Les étapes E16 et E17 sont mises en œuvre par le module 30. De la sorte, le modèle bicyclette converge vers un modèle le plus proche possible de la réalité et la contribution $\theta_{FF}$ du module 16, qui devient plus adaptée à la configuration réelle du véhicule, est de plus en plus prépondérante lors d'un virage. Il est alors possible de réduire la dynamique du module à rétroaction de sorte que le confort est amélioré pour le conducteur et les occupants du véhicule automobile.

En référence à la figure 7, on a représenté un procédé selon un second mode de mise en œuvre de l'invention. Les éléments identiques portent les mêmes références. L'étape E14 est remplacée par une étape E24, l'étape E15 est remplacée par une étape E26 et une étape E25 est incorporée entre les étapes E24 et E26. Dans ce mode de mise en œuvre, le calcul du terme de boucle ouverte est déterminé par application de l'équation :

[Math 13]

$$\delta_{eq} = \rho \left( L_{tot} - \frac{m(C_f L_f - C_r L_r)}{C_f C_r L_{tot}} \cdot v^2 \right)$$

Au cours de l'étape E24, les paramètres primaires déterminés sont l'écart latéral $y_L$ par rapport à une trajectoire idéale, la vitesse v, en l'espèce longitudinale, du véhicule, l'angle de cap relatif $\psi_{rel}$ du véhicule, l'angle au volant $SWA_{mesuré}$ et la courbure $\rho$ de voie de circulation.

Lors de l'étape E25, on construit une trajectoire de référence à partir des paramètres primaires déterminés à l'étape E24. Plus particulièrement, la trajectoire de référence est déterminée dans un repère cartésien (x,y) en admettant que la position et le cap du véhicule au début d'enregistrement définissent l'origine du repère cartésien (H1) et en calculant la trajectoire à l'aide d'une formule de récurrence.

Du fait de l'hypothèse (H1), on a, à t = 0 :

[Math 14]

$$\psi_{route}(0) = X_{route}(0) = Y_{route}(0) = 0$$

où $\psi_{route}$, $X_{route}$ et $Y_{route}$ sont respectivement l'angle de cap, l'abscisse et l'ordonnée d'une trajectoire de centre de voie de circulation.

La dérivée de l'angle de cap de la trajectoire de centre de voie de circulation par rapport au temps s'écrit comme suit :

[Math 15]

$$\dot{\psi}_{route} = \rho \cdot v$$

En intégrant par rapport au temps cette expression, on obtient, en discret :

[Math 16]

$$\psi_{route}(t_k) = \rho \cdot v \cdot (t_k - t_{k-1}) + \psi_{route}(t_{k-1})$$

Cette variable permet de reconstruire la trajectoire de la route dans le repère absolu :

[Math 17]

$$\begin{cases} X_{route}(t_k) = v \cdot \cos\big(\psi_{route}(t_k)\big) \cdot (t_k - t_{k-1}) + X_{route}(t_{k-1}) \\ Y_{route}(t_k) = v \cdot \sin\big(\psi_{route}(t_k)\big) \cdot (t_k - t_{k-1}) + Y_{route}(t_{k-1}) \end{cases}$$

De la sorte, on estime la trajectoire de centre de voie de circulation. La relation entre l'angle de cap de la trajectoire de centre de voie de circulation, l'angle de lacet relatif et l'angle de lacet absolu s'écrit comme suit :

[Math 18]

$$\psi_{rel} = \psi_{absolu} - \psi_{route} \Rightarrow \psi_{absolu} = \psi_{rel} + \psi_{route}$$

À partir de cette équation et des mesures de l'écart latéral $y_L$ et de l'angle de lacet relatif $\psi_{rel}$ mesuré, on construit la trajectoire effectivement suivie par le véhicule autour de la trajectoire de centre de voie de circulation dans un repère absolu :

$$[\text{Math } 19]$$
$$\begin{cases} X_{ref}(t_k) = X_{route}(t_k) - y_L(t_k) \cdot \sin\left(\psi_{rel} + \psi_{route}\right) \cdot (t_k - t_{k-1}) \\ Y_{ref}(t_k) = Y_{route}(t_k) + y_L(t_k) \cdot \cos\left(\psi_{rel} + \psi_{route}\right) \cdot (t_k - t_{k-1}) \end{cases}$$

Au cours de l'étape E26, on cherche à trouver un modèle bicyclette reproduisant la trajectoire de référence lorsqu'il est excité avec la même vitesse longitudinale et le même angle au volant. Ce calcul sera expliqué en référence au schéma de la figure 8. Le schéma de la figure 8 présente deux blocs 52 de saisie de variables à déterminer. Plus particulièrement, les blocs 52 permettent la saisie des variables correspondants à la rigidité de dérive $C_f$ sur le train avant et à la rigidité de dérive $C_r$ sur le train arrière. Bien que, dans l'exemple illustré, les variables à déterminer soient des rigidités de dérive, on peut bien entendu sans sortir du cadre de l'invention envisager d'autres variables à déterminer, par exemple le moment d'inertie $I_z$, les distances $L_f$ et $L_r$ ou encore la masse m.

Le schéma de la figure 8 comporte quatre blocs de saisie de constante 54. Dans l'exemple illustré, les constantes saisies correspondent à la distance $L_f$, la distance $L_r$, l'empattement $L_{tot}$ (Ltot) et la masse m (Mtot) du véhicule.

Le schéma de la figure 8 comporte deux blocs de saisie de paramètres primaires 56 et 58. Le bloc 56 permet de saisir la vitesse v (speed). Le bloc 58 permet de saisir l'angle au volant $SWA_{mesuré}$ (SWA_rad) en radians.

Le schéma de la figure 8 comporte un bloc de génération de matrice 60 permettant de générer la matrice A de la représentation d'état. Le schéma de la figure 8 comprend un bloc de multiplication par un gain pur 62 divisant l'angle saisi dans le bloc 58 par le rapport de démultiplication pour obtenir l'angle de braquage aux roues avant.

Le schéma de la figure 8 comprend un bloc multiplicateur de matrices 64 multipliant le résultat du bloc 62 par la matrice générée par le bloc 60. Un bloc intégrateur 66, un bloc multiplicateur de matrices 68 et un sommateur 70 sont agencés en sortie du bloc 64.

Un bloc intégrateur 72 et un sommateur 74 en aval de l'intégrateur 66 fournissent un résultat à un bloc cosinus 76, dont la sortie est multipliée à la vitesse v par un bloc de multiplication 78 et intégré par un bloc intégrateur 80. En parallèle, le résultat précité est soumis à un bloc sinus 82 dont la sortie est multipliée à la vitesse v par un bloc de multiplication 84 et intégrée par un bloc intégrateur 86. Deux blocs de sortie 88 et 90 recueillent les signaux $X_{veh}$ et $Y_{veh}$ intégrés par les blocs 80 et 86, respectivement.

Le modèle de calcul correspondant à la figure 8 permet d'obtenir, à partir de la vitesse v et de l'angle au volant $SWA$, une trajectoire ($X_{veh}$, $Y_{veh}$) de véhicule délivrée par les blocs 88 et 90. En venant modifier les variables saisies dans les blocs 52, on cherche à ce que les coordonnées de sortie délivrées par les blocs 88 et 90 correspondent aux coordonnées de la trajectoire de référence. Plus particulièrement, cette correspondance est mise en œuvre au sens des moindres carrés sur tout l'enregistrement choisi. Ce faisant, on cherche à minimiser la fonction $f$ :

$$[\text{Math } 20]$$
$$f = \sum_i \left(X_{ref}(i) - X_{veh}(i)\right)^2 + \left(Y_{ref}(i) - Y_{veh}(i)\right)^2$$

Une telle minimisation peut être faite en utilisant par exemple la fonction « Lsqnonlin » de Matlab. Ce faisant, on obtient un couple de rigidités ($C_{f\_corrigé}$, $C_{r\_corrigé}$) corrigé.

Les étapes E16 et E17 du procédé de la figure 7 sont similaires aux étapes E16 à E17 du procédé de la figure 3, les deux paramètres secondaires $C_f$ et $C_r$ remplaçant le paramètre secondaire $\nabla_{sv}$.

Plus particulièrement, au cours de l'étape E16 du procédé de la figure 7, on calcule une moyenne $C_{r\_moyenne}$ et une moyenne $C_{r\_moyenne}$ :

$$[\text{Math } 21]$$
$$C_{f\_moyenne} = \frac{C_{f\_actuel} + C_{f\_corrigé}}{2}$$
$$C_{r\_moyenne} = \frac{C_{r\_actuel} + C_{r\_corrigé}}{2}$$

où $C_{r\_actuel}$, $C_{r\_actuel}$ sont respectivement les rigidités actuelles sur les trains avant et arrière, c'est-à-dire les rigidités avant la mise en œuvre du procédé.

Au cours de l'étape E17 du procédé de la figure 7, on remplace la rigidité $C_{f\_actuel}$ par la moyenne $C_{f\_moyenne}$ et on remplace la rigidité $C_{r\_actuel}$ par la moyenne $C_{r\_moyenne}$.

De la sorte, on a établi un modèle bicyclette permettant d'augmenter la contribution $\theta_{FF}$ du module 16 lors d'un virage. On notera que le couple de rigidités corrigé n'est pas forcément le plus représentatif du véhicule automobile. En effet, il suffit de trouver une combinaison de valeurs reproduisant le comportement du véhicule automobile. Dans le deuxième mode de mise en œuvre, plusieurs paires $(C_f, C_r)$ aboutissent à une contribution $\theta_{FB}$ du module à rétroaction quasiment nulle en virage stabilisé. L'invention permet de converger vers l'une quelconque de ces paires et permet donc, en mobilisant peu de ressources de calcul, d'augmenter la contribution $\theta_{FF}$ du module anticipateur à la commande de braquage et donc d'améliorer le confort des occupants du véhicule automobile.

**Revendications**

1. Procédé de réglage d'un module anticipateur (16) équipant un dispositif de contrôle (2) de la trajectoire d'un véhicule automobile, ledit module utilisant un modèle bicyclette dudit véhicule, dans lequel :

   - on détecte (E13) si le module anticipateur (16) est inadapté si :

      - l'écart latéral ($y_L$) par rapport à une trajectoire idéale est supérieur à un seuil d'écart ($s_e$) prédéfini, et
      - un rapport d'une contribution ($\theta_{FB}$) du module à rétroaction sur une contribution ($\theta_{FF}$) du module anticipateur (16) pour la commande de braquage est supérieur à un seuil de rapport ($s_r$) prédéfini,

   - on détermine (E14, E24) des paramètres primaires,
   - on calcule (E15, E26) un paramètre secondaire par une méthode de calcul par optimisation tenant compte des paramètres primaires déterminés, et
   - on met à jour (E16, E17) le modèle bicyclette du véhicule en tenant compte du paramètre secondaire calculé.

2. Procédé selon la revendication 1 dans lequel, lorsque l'on met à jour un modèle bicyclette du véhicule, on détermine une donnée caractéristique ($\nabla_{sv\_corrigé}$, $C_{f\_corrigé}$, $C_{r\_corrigé}$ ) de modèle bicyclette. corrigé en tenant compte du paramètre secondaire, on calcule une moyenne ($\nabla_{sv\_moyenne}$, $C_{f\_moyenne}$, $C_{r\_moyenne}$) entre une donnée caracté-ristique ($\nabla_{sv\_actuel}$, $C_{f\_actuel}$, $C_{r\_actuel}$) de modèle bicyclette actuel et la donnée caractéristique ($\nabla_{sv\_actuel}$, $C_{f\_corrigé}$, $C_{r\_corrigé}$) de modèle bicyclette corrigé et on remplace la donnée caractéristique ( $\nabla_{sv\_actuel}$, $C_{f\_actuel}$, $C_{r\_actuel}$) de modèle bicyclette actuel par la moyenne calculée ($\nabla_{sv\_moyenne}$, $C_{f\_moyenne}$, $C_{r\_moyenne}$).

3. Procédé selon l'une quelconque des revendications 1 à 2 dans lequel le calcul du paramètre secondaire (E15) comprend le calcul d'un gradient de sous-virage ($\nabla_{sv\_corrigé}$) corrigé, le gradient de sous-virage ($\nabla_{sv\_corrigé}$) corrigé étant de préférence une donnée caractéristique de modèle bicyclette du véhicule.

4. Procédé selon la revendication 3 dans lequel les paramètres primaires comprennent une courbure ($\rho$) de voie de circulation, une vitesse (v) du véhicule et un angle au volant ($SWA_{mesuré}$), le gradient de sous-virage ($\nabla_{sv\_corrigé}$) corrigé étant calculé par minimisation d'un écart d'angle au volant, et de préférence par minimisation de la fonction :

$$f = \sum_i \left( \rho(i) \times (L_{tot} + \nabla_{sv} \times v(i)^2) \times d - SWA_{mesuré}(i) \right)^2$$

   où, $L_{tot}$ est l'empattement du véhicule, $d$ est le rapport de démultiplication de la colonne de direction du véhicule, $\nabla_{sv}$ est le gradient de sous-virage et quel que soit une itération i, $\rho(i)$ est la courbure de voie de circulation lors de l'itération i, $v(i)$ est la vitesse du véhicule lors de l'itération i et $SWA_{mesuré}(i)$ est l'angle au volant au cours de l'itération i.

5. Procédé selon l'une quelconque des revendications 1 à 2 dans lequel le calcul du paramètre secondaire (E26) comprend le calcul d'une rigidité de train avant ($C_{f\_corrigé}$) corrigée et/ou d'une rigidité de train arrière ($C_{r\_corrigé}$) corrigée.

6. Procédé selon la revendication 5 dans lequel les paramètres primaires comprennent un écart latéral ($y_L$) par rapport à une trajectoire idéale, une vitesse longitudinale v du véhicule, un angle de cap ($\psi_{rel}$) du véhicule, un angle au volant ($SWA_{mesuré}$) et une courbure ($\rho$) de voie de circulation et dans lequel on construit une trajectoire de référence ($X_{ref}, Y_{ref}$) à partir des paramètres primaires, l'optimisation étant mise en œuvre par minimisation de l'écart entre la trajectoire de référence ($X_{ref}, Y_{ref}$) et une trajectoire du véhicule déterminée ($X_{veh}, Y_{veh}$) à partir de données caractéristiques de modèle bicyclette actuel du véhicule.

7. Procédé selon l'une quelconque des revendications 1 à 6 dans lequel on réinitialise (E12) le modèle bicyclette du véhicule à chaque période d'absence d'utilisation du véhicule.

8. Programme d'ordinateur comprenant un code configuré pour, lorsqu'il est exécuté par un processeur ou une unité de contrôle électronique, mettre en œuvre le procédé selon l'une quelconque des revendications 1 à 7.

9. Dispositif de réglage (22) d'un module anticipateur (16) équipant un dispositif de contrôle (2) de la trajectoire d'un véhicule automobile, ledit module utilisant un modèle bicyclette dudit véhicule, comprenant un module de détection (24) configuré pour détecter si le module anticipateur (16) est inadapté lors d'un virage en tenant compte d'un écart latéral ($y_L$) par rapport à une trajectoire idéale et/ou d'une contribution ($\theta_{FB}$) d'un module à rétroaction du dispositif de contrôle (2), un module de détermination (26) de paramètres primaires, un module de calcul (28) apte à calculer un paramètre secondaire par une méthode de calcul par optimisation tenant compte des paramètres primaires déterminés par le module de détermination (26) et un module de mise à jour (30) configuré pour mettre à jour le modèle bicyclette du véhicule en tenant compte du paramètre secondaire calculé par le module de calcul (28).

## Patentansprüche

1. Verfahren zur Regelung eines Antizipationsmoduls (16), mit dem eine Vorrichtung zur Steuerung (2) der Bahn eines Kraftfahrzeugs ausgestattet ist, wobei das Modul ein Fahrradmodell des Fahrzeugs verwendet, wobei:

   - detektiert wird (E13), ob das Antizipationsmodul (16) unangepasst ist, wenn:

     - die seitliche Abweichung ($y_L$) in Bezug auf eine ideale Bahn größer als ein vorgegebener Abweichungs-schwellenwert ($s_e$) ist, und
     - ein Verhältnis eines Beitrags ($\theta_{FB}$) des Moduls mit Rückwirkung auf einen Beitrag ($\theta_{FF}$) des Antizipations-moduls (16) zur Lenkungssteuerung größer als ein vorgegebener Verhältnisschwellenwert ($s_r$) ist,
     - primäre Parameter bestimmt werden (E14, E24),
     - ein sekundärer Parameter durch eine Methode zur Berechnung durch Optimierung unter Berücksichtigung der bestimmten primären Parameter berechnet wird (E15, E26) und
     - das Fahrradmodell des Fahrzeugs unter Berücksichtigung des berechneten sekundären Parameters aktualisiert wird (E16, E17).

2. Verfahren nach Anspruch 1, wobei, wenn ein Fahrradmodell des Fahrzeugs aktualisiert wird, ein charakteristisches Datenelement ($\nabla_{sv\_corrigé}$, $C_{f\_corrigé}$, $C_{r\_corrigé}$) des korrigierten Fahrradmodells unter Berücksichtigung des sekundären Parameters bestimmt wird, ein Mittelwert ($\nabla_{sv\_moyenne}$, $C_{f\_moyenne}$, $C_{r\_moyenne}$) zwischen einem charakteristischen Datenelement ($\nabla_{sv\_actuel}$, $C_{f\_actuel}$, $C_{r\_actuel}$) des aktuellen Fahrradmodells und dem charakteristischen Datenelement ($\nabla_{sv\_actuel}$, $C_{f\_corrigé}$, $C_{r\_corrigé}$) des korrigierten Fahrradmodells berechnet wird und das charakteristische Datenelement ($\nabla_{sv\_actuel}$, $C_{f-actuel}$, $C_{r\_actuel}$) des aktuellen Fahrradmodells durch den berechneten Mittelwert ($\nabla_{sv\_moyenne}$, $C_{f\_moyenne}$, $C_{r\_moyenne}$) ersetzt wird.

3. Verfahren nach einem der Ansprüche 1 bis 2, wobei die Berechnung des sekundären Parameters (E15) die Berechnung eines korrigierten Untersteuerungsgradienten ($\nabla_{sv\_corrigé}$) umfasst, wobei der korrigierte Untersteuerungsgradient ($\nabla_{sv\_corrigé}$) bevorzugt ein charakteristisches Datenelement des Fahrradmodells des Fahrzeugs ist.

4. Verfahren nach Anspruch 3, wobei die primären Parameter eine Fahrbahnkrümmung ($\rho$), eine Geschwindigkeit (v) des Fahrzeugs und einen Lenkradwinkel ($SWA_{mesuré}$) umfassen, wobei der korrigierte Untersteuerungsgradient ($\nabla_{sv\_corrigé}$) durch Minimierung einer Lenkradwinkelabweichung berechnet wird und bevorzugt durch Minimierung der Funktion:

$$f = \sum_i \left( \rho(i) \times (L_{tot} + \nabla_{sv} \times v(i)^2) \times d - SWA_{mesuré}(i) \right)^2$$

worin $L_{tot}$ der Radstand des Fahrzeugs ist, d das Übersetzungsverhältnis der Lenksäule des Fahrzeugs ist, $\nabla_{sv}$ der Untersteuerungsgradient ist und, unabhängig von einer Iteration i, $\rho(i)$ die Fahrbahnkrümmung bei der Iteration i ist, v(i) die Geschwindigkeit des Fahrzeugs bei der Iteration i ist und $SWA_{mesuré}(i)$ der Lenkradwinkel während der Iteration i ist.

5.  Verfahren nach einem der Ansprüche 1 bis 2, wobei die Berechnung des sekundären Parameters (E26) die Berechnung einer korrigierten Steifigkeit der Vorderachse ($C_{f\_corrigé}$) und/oder einer korrigierten Steifigkeit der Hinterachse ($C_{r\_corrigé}$) umfasst.

6.  Verfahren nach Anspruch 5, wobei die primären Parameter eine seitliche Abweichung ($y_L$) in Bezug auf eine ideale Bahn, eine Längsgeschwindigkeit v des Fahrzeugs, einen Kurswinkel ($\psi_{rel}$) des Fahrzeugs, einen Lenkradwinkel ($SWA_{mesuré}$) und eine Fahrbahnkrümmung ($\rho$) umfassen und wobei eine Referenzbahn ($X_{ref},Y_{ref}$) ausgehend von den primären Parametern konstruiert wird, wobei die Optimierung durch Minimierung der Abweichung zwischen der Referenzbahn ($X_{ref},Y_{ref}$) und einer ausgehend von charakteristischen Daten des aktuellen Fahrradmodells des Fahrzeugs bestimmten Bahn des Fahrzeugs ($X_{veh},Y_{veh}$) durchgeführt wird.

7.  Verfahren nach einem der Ansprüche 1 bis 6, wobei das Fahrradmodell des Fahrzeugs bei jeder Nichtverwendungsperiode des Fahrzeugs reinitialisiert wird (E12).

8.  Computerprogramm, umfassend einen Code, der dazu ausgestaltet ist, bei seiner Ausführung durch einen Prozessor oder eine elektronische Steuereinheit das Verfahren nach einem der Ansprüche 1 bis 7 durchzuführen.

9.  Vorrichtung zur Regelung (22) eines Antizipationsmoduls (16), mit dem eine Vorrichtung zur Steuerung (2) der Bahn eines Kraftfahrzeugs ausgestattet ist, wobei das Modul ein Fahrradmodell des Fahrzeugs verwendet, umfassend ein Detektionsmodul (24), das dazu ausgestaltet ist zu detektieren, ob das Antizipationsmodul (16) unangepasst ist bei einer Kurve unter Berücksichtigung einer seitlichen Abweichung ($y_L$) in Bezug auf eine ideale Bahn und/oder eines Beitrags ($\theta_{FB}$) eines Moduls mit Rückwirkung der Vorrichtung zur Steuerung (2), ein Bestimmungsmodul (26) zur Bestimmung von primären Parametern, ein Rechenmodul (28), das geeignet ist, einen sekundären Parameter durch eine Methode zur Berechnung durch Optimierung unter Berücksichtigung der von dem Bestimmungsmodul (26) bestimmten primären Parameter zu berechnen, und ein Aktualisierungsmodul (30), das dazu ausgestaltet ist, das Fahrradmodell des Fahrzeugs unter Berücksichtigung des von dem Rechenmodul (28) berechneten sekundären Parameters zu aktualisieren.

## Claims

1.  Method for setting an anticipator module (16) with which a control device (2) controlling the trajectory of a motor vehicle is equipped, said module using a bicycle model of said vehicle, wherein:

    - a detection is made (E13) as to whether the anticipator module (16) is unsuitable if:

        - the lateral deviation ($y_L$) with respect to an ideal trajectory is greater than a predefined deviation threshold ($s_e$), and
        - a ratio of a contribution ($\theta_{FB}$) of the feedback module to a contribution ($\theta_{FF}$) of the anticipator module (16) for steering control is greater than a predefined ratio threshold ($s_r$),
    - primary parameters are determined (E14, E24),
    - a secondary parameter is calculated (E15, E26) by an optimization-based calculation method taking account of the determined primary parameters, and
    - the bicycle model of the vehicle is updated (E16, E17) by taking account of the calculated secondary parameter.

2.  Method according to Claim 1, wherein, when a bicycle model of the vehicle is updated, a characteristic datum ($V_{sv\_corrected}$, $C_{f\_corrected}$, $C_{r\_corrected}$) of the corrected bicycle model is determined by taking account of the secondary parameter, an average ($V_{sv\_average}$, $C_{f\_average}$, $C_{r\_average}$) between a characteristic datum ($V_{sv\_current}$, $C_{f\_current}$, $C_{r\_current}$) of the current bicycle model and the characteristic datum ($V_{sv\_current}$, $C_{f\_corrected}$, $C_{r\_corrected}$) of the corrected bicycle model is calculated, and the characteristic datum ($V_{sv\_current}$, $C_{f\_current}$, $C_{r\_current}$) of the current bicycle model is replaced by the calculated average ($V_{sv\_average}$, $C_{f\_average}$, $C_{r\_average}$).

3.  Method according to either one of Claims 1 and 2, wherein the calculation of the secondary parameter (E15) comprises the calculation of a corrected understeering gradient ($V_{sv\_corrected}$), the corrected understeering gradient ($V_{sv\_corrected}$) preferably being a characteristic datum of the bicycle model of the vehicle.

4.  Method according to Claim 3, wherein the primary parameters comprise a traffic lane curvature ($\rho$), a speed (v) of the vehicle and a steering wheel angle (SWA$_{measured}$), the corrected understeering gradient ($\nabla_{sv\_corrected}$) being calculated by the minimization of a steering wheel angle deviation, and preferably by the minimization of the function:

$$f = \sum_i \left(\rho(i) \times (L_{tot} + \nabla_{sv} \times v(i)^2) \times d - SWA_{measured}(i)\right)^2$$

in which L$_{tot}$ is the wheelbase of the vehicle, d is the gear reduction ratio of the steering column of the vehicle, $\nabla_{sv}$ is the understeering gradient and, regardless of an iteration i, $\rho(i)$ is the traffic lane curvature upon the iteration i, v(i) is the speed of the vehicle upon the iteration i and SWA$_{measured}$(i) is the steering wheel angle during the iteration i.

5. Method according to either one of Claims 1 and 2, wherein the calculation of the secondary parameter (E26) comprises the calculation of a corrected front train stiffness (C$_{f\_corrected}$) and/or of a corrected rear train stiffness (C$_{r\_corrected}$).

6. Method according to Claim 5, wherein the primary parameters comprise a lateral deviation (y$_L$) with respect to an ideal trajectory, a longitudinal speed v of the vehicle, a heading angle ($\psi_{rel}$) of the vehicle, a steering wheel angle (SWA$_{measured}$) and a traffic lane curvature ($\rho$) and wherein a reference trajectory (X$_{ref}$,Y$_{ref}$) is constructed from the primary parameters, the optimization being implemented by the minimization of the deviation between the reference trajectory (X$_{ref}$,Y$_{ref}$) and a trajectory of the vehicle (X$_{veh}$,Y$_{veh}$) determined from characteristic data of the current bicycle model of the vehicle.

7. Method according to any one of Claims 1 to 6, wherein the bicycle model of the vehicle is reset (E12) on each period of absence of use of the vehicle.

8. Computer program comprising a code configured to, when it is executed by a processor or an electronic control unit, implement the method according to any one of Claims 1 to 7.

9. Setting device (22) for setting an anticipator module (16) with which a control device (2) controlling the trajectory of a motor vehicle is equipped, said module using a bicycle model of said vehicle, comprising a detection module (24) configured to detect whether the anticipator module (16) is unsuitable during a turn by taking account of a lateral deviation (y$_L$) with respect to an ideal trajectory and/or a contribution ($\theta_{FB}$) of a feedback module of the control device (2), a module (26) for determining primary parameters, a computation module (28) capable of calculating a secondary parameter by an optimization-based calculation method taking account of the primary parameters determined by the determination module (26) and an updating module (30) configured to update the bicycle model of the vehicle by taking account of the secondary parameter calculated by the computation module (28).

14

[Fig 1]

[Fig 2]

[Fig 3]

[Fig 4]

[Fig 5]

[Fig 6]

[Fig 7]

[Fig 8]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3051756
- US 2007213901 A1